# FASCICULE DE BREVET EUROPEEN

(11) **EP 3 094 544 B1**
(45) Date de publication et mention de la délivrance du brevet: **02.01.2019**
(21) Numéro de dépôt: 14814928.9
(22) Date de dépôt: 17.11.2014
(51) Int. Cl.: B62D 25/20

(54) **PROCÉDÉ DE FABRICATION D'UNE PARTIE CENTRALE DE SOUBASSEMENT COMPRENANT UN TUNNEL COMPRENANT UNE MULTITUDE DE PIÈCES**
VERFAHREN ZUR HERSTELLUNG EINES ZENTRALEN UNTERBODENABSCHNITTS MIT MEHRTEILIGEM TUNNEL
METHOD FOR MANUFACTURING A CENTRAL UNDERBODY PORTION INCLUDING A MULTI PART TUNNEL

(30) Priorité: 14.01.2014 FR 1450278
(43) Date de publication de la demande: 23.11.2016
(73) Titulaire: Renault S.A.S., 92100 Boulogne-Billancourt (FR)
(72) Inventeur: KOWALSKI, Philippe, F-78180 Montigny Le Bretonneux (FR); HLUBINA, Thierry, F-92370 Chaville (FR)
(86) Numéro de dépôt international: PCT/FR2014/052934
(87) Numéro de publication internationale: WO 2015/107272

(56) Documents cités:
- EP-A1- 2 441 653
- WO-A1-2009/086329
- WO-A1-2010/130905
- DE-A1- 19 507 767
- US-A1- 2002 067 053
- US-A1- 2005 189 791

## Description

### Domaine technique de l'invention

L'invention concerne une partie centrale de soubassement de caisse structurelle de véhicule automobile, destinée à délimiter la partie inférieure d'un habitacle du véhicule et à être interposée entre des parties structurelles avant et arrière.

L'invention a pour objet également un procédé de fabrication d'une telle partie centrale de soubassement.

### État de la technique

Classiquement, une partie centrale de soubassement comprend un tunnel longitudinal de structure, orienté suivant la direction longitudinale du véhicule de sorte à s'étendre sur toute la longueur de la partie centrale et centré sur la largeur de la partie centrale suivant la direction latérale du véhicule. L'état de la technique WO 2009/086329 A1 divulgue un tel procédé de fabrication.

Une technique connue consiste à réaliser le tunnel longitudinal en une seule pièce d'un seul tenant ayant une interface avant pour la transmission et la reprise d'efforts vis-à-vis de la partie structurelle avant de la caisse et une interface arrière pour la transmission et la reprise d'efforts vis-à-vis de la partie structurelle arrière de la caisse. Ces interfaces peuvent également se pratiquer vis-à-vis du plancher de la partie centrale équipée de ce tunnel longitudinal.

Pour répondre aux exigences de résistance mécanique, la pièce est dimensionnée en conséquence et formée dans un matériau adéquat, la rendant lourde. La capacité de transmission d'efforts reste en outre limitée, en dépit d'un encombrement potentiellement élevé.

En outre, il est connu qu'une famille de véhicule peut présenter des véhicules ayant une première longueur et des véhicules ayant une deuxième longueur supérieure à la première longueur, notamment en fonction de la capacité d'embarquement recherchée. Ces différences se traduisent par des différences de longueurs des parties centrales de soubassement de ces deux véhicules. Il en résulte la nécessité de concevoir, fabriquer, stocker, implémenter, monter des pièces constitutives des tunnels longitudinaux ayant des longueurs différentes. Toutes ces opérations sont onéreuses et la flexibilité conférée par les solutions existantes n'est pas satisfaisante.

### Objet de l'invention

Le but de la présente invention est de proposer une partie centrale de soubassement de caisse structurelle de véhicule automobile qui remédie aux inconvénients listés ci-dessus.

Notamment, un objet de l'invention est de fournir une telle partie centrale de soubassement et une caisse structurelle qui permettent :
- d'obtenir un gain de masse par rapport aux solutions existantes,
- d'augmenter le niveau d'efforts qui peut transiter par le tunnel longitudinal de structure en cas de choc par rapport aux solutions existantes,
- d'améliorer l'adaptabilité à différentes longueurs dans une même famille de véhicule, augmentant la flexibilité et les coûts,
- de préserver la faisabilité dans un volume alloué faible, avec notamment une section constante et des longueurs variables.

Cet objet peut être atteint par un procédé de fabrication d'une partie centrale de soubassement de caisse structurelle de véhicule automobile, destinée à délimiter la partie inférieure d'un habitacle du véhicule, comprenant un tunnel longitudinal de structure comportant l'assemblage entre eux :
- d'un plancher de la partie centrale de soubassement,
- d'un profilé central monobloc rapporté sur le plancher, orienté suivant une direction longitudinale du véhicule et ayant une longueur dépendant de la longueur de la partie centrale de soubassement suivant la direction longitudinale,
- et d'au moins une pièce d'extrémité agencée dans le prolongement du profilé central et configurée de sorte à présenter une interface assurant un raccordement et une fonction de reprise et de transmission d'efforts avec une partie structurelle de la caisse distincte de la partie centrale de soubassement et/ou avec ledit plancher, caractérisé en ce qu'il comprend une étape d'adaptation de la longueur du profilé central en fonction de la longueur de la partie centrale de soubassement suivant la direction longitudinale du véhicule.

Selon d'autres caractéristiques additionnelles de l'invention, l'étape d'adaptation comprend une étape de fourniture d'un profilé initial puis une étape de découpe du profilé initial pour définir la longueur du profilé central, notamment en sélectionnant parmi au moins une longueur selon la première valeur correspondant au premier type de partie centrale de soubassement et une longueur selon la deuxième valeur correspondant au deuxième type de partie centrale de soubassement.

Selon d'autres caractéristiques additionnelles de l'invention, le profilé central présente une longueur ayant une première valeur dimensionnée de sorte que la partie centrale de soubassement présente une longueur lui permettant de recevoir, du côté de l'habitacle, deux places assises décalées entre elles selon une direction latérale du véhicule, la partie centrale de soubassement munie du profilé central ayant la longueur correspondant à ladite première valeur constituant un premier type de partie centrale de soubassement.

Selon d'autres caractéristiques additionnelles de l'invention, le profilé central présente une longueur ayant une deuxième valeur dimensionnée de sorte que la partie centrale de soubassement présente une longueur lui permettant de recevoir, du côté de l'habitacle, quatre places assises réparties en deux rangs décalés entre eux selon la direction longitudinale et incluant chacun deux places assises décalées entre elles selon la direction latérale, la partie centrale de soubassement munie du profilé central ayant la longueur correspondant à ladite deuxième valeur constituant un deuxième type de partie centrale de soubassement.

Selon d'autres caractéristiques additionnelles de l'invention, ladite au moins une pièce d'extrémité est configurée de sorte à indépendamment pouvoir être utilisée au sein d'une partie centrale de soubassement du premier type et au sein d'une partie centrale de soubassement du deuxième type.

Selon d'autres caractéristiques additionnelles de l'invention, le profilé central appartenant au premier type de partie centrale de soubassement et le profilé central appartenant au deuxième type de partie centrale de soubassement sont adaptés, notamment par découpage, à partir d'un profilé initial identique.

Selon d'autres caractéristiques additionnelles de l'invention, ladite au moins une pièce d'extrémité comprend :
- une pièce d'extrémité avant montée à l'extrémité avant du profilé central dans le prolongement du profilé central selon la direction longitudinale et présentant une interface assurant un raccordement et une fonction de reprise et de transmission d'efforts avec une partie structurelle avant de la caisse distincte de la partie centrale de soubassement et/ou avec le plancher,
- et une pièce d'extrémité arrière montée à l'extrémité arrière du profilé central dans le prolongement du profilé central selon la direction longitudinale et présentant une interface assurant un raccordement et une fonction de reprise et de transmission d'efforts avec une partie structurelle arrière de la caisse distincte de la partie centrale de soubassement et/ou avec le plancher.

Selon d'autres caractéristiques additionnelles de l'invention, le plancher est constitué par une pièce monobloc d'un seul tenant sur toute la longueur de la partie centrale de soubassement suivant la direction longitudinale et sur toute la largeur de la partie centrale de soubassement suivant la direction latérale.

Selon d'autres caractéristiques additionnelles de l'invention, le plancher, ladite au moins une pièce d'extrémité et le profilé central sont conformés et assemblés entre eux de sorte que, sur tout ou partie de sa longueur suivant la direction longitudinale, le tunnel longitudinal de structure délimite un corps creux de renfort de forme tubulaire, ayant une section présentant un contour fermé.

Selon d'autres caractéristiques additionnelles de l'invention, le profilé central et chaque pièce d'extrémité sont rapportés contre une face supérieure du plancher de sorte que le corps creux de renfort est situé au-dessus du plancher, du côté de l'habitacle par rapport au plancher.

Selon d'autres caractéristiques additionnelles de l'invention, la section du profilé central, dans un plan de coupe perpendiculaire à sa direction d'extrusion, présente un profil à contour ouvert, notamment sous la forme d'une base située au-dessus et à distance du plancher et prolongée à ses extrémités par deux ailes reliant la base et le plancher.

Selon d'autres caractéristiques additionnelles de l'invention, le profilé central (13) est formé dans une matière présentant une limite d'élasticité supérieure à 900 Mpa.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- les figures 1 et 2 sont des vues en perspective d'un exemple de partie centrale de soubassement selon l'invention, respectivement à l'état assemblé et selon un éclaté vis-à-vis du tunnel longitudinal de structure,
- les figures 3 et 4 sont des vues en perspective du tunnel longitudinal de structure utilisé dans les figures précédentes, respectivement selon un éclaté et à l'état assemblé,
- les figures 5 et 6 représentent, selon une coupe réalisée suivant un plan de coupe latéral-vertical, de la partie centrale de soubassement, respectivement en perspective avant et en vue de devant.

### Description de modes préférentiels de l'invention

La description qui va suivre est faite en référence à un repère orthonormé (X, Y, Z) associé classiquement à un véhicule automobile, dans lequel X est la direction longitudinale horizontale avant-arrière du véhicule, Y est la direction transversale droite-gauche qui est horizontale et perpendiculaire à X, et Z est la direction verticale conjointement perpendiculaire aux directions X et Y. Ces directions peuvent être considérées comme liées à la caisse structurelle du véhicule et au véhicule en lui-même.

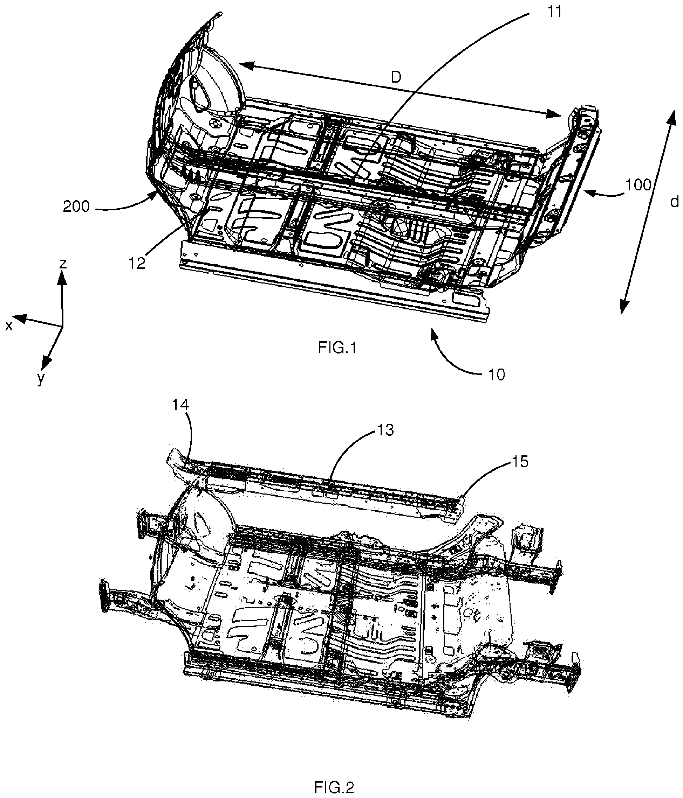

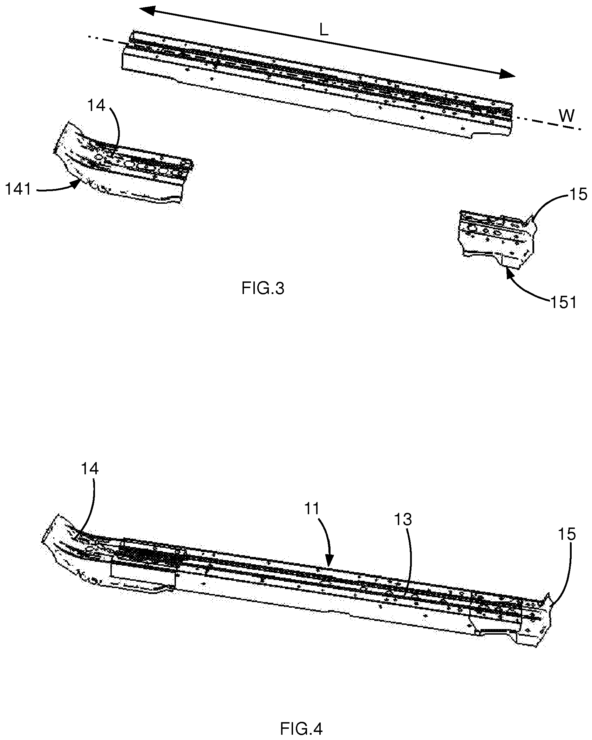

En référence aux figures 1 à 4 notamment, la partie centrale de soubassement 10 de caisse structurelle de véhicule automobile, destinée à délimiter la partie inférieure d'un habitacle du véhicule, comprend un tunnel longitudinal de structure 11 comportant l'assemblage entre eux :
- d'un plancher 12 de la partie centrale de soubassement 10,
- d'un profilé central 13 monobloc rapporté sur le plancher 12, orienté suivant la direction longitudinale X et ayant une longueur L (figure 3) dépendant directement de la longueur D de la partie centrale de soubassement 10 suivant la direction longitudinale X,
- et d'au moins une pièce d'extrémité 14, 15 agencée dans le prolongement du profilé central 13 et configurée de sorte à présenter une interface 141, 151 assurant un raccordement et une fonction de reprise et de transmission d'efforts avec une partie structurelle 100, 200 de la caisse structurelle distincte de la partie centrale de soubassement 10 et/ou avec le plancher 12.

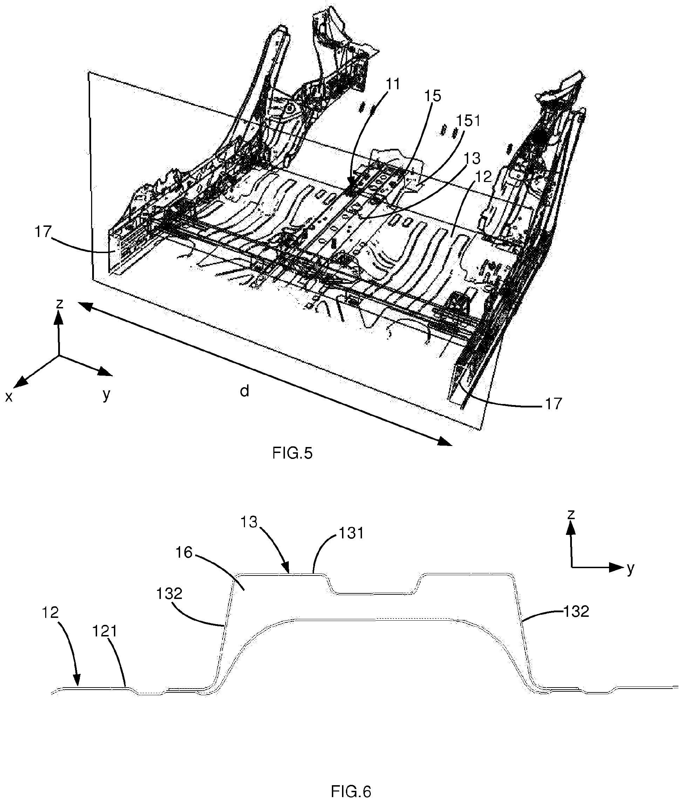

Les parties structurelles avant 200 et arrière 100 ne sont que partiellement représentées. Par exemple, la partie avant 200 peut comprendre au moins un longeron avant destiné à la transmission ou la reprise d'efforts longitudinaux vis-à-vis du tunnel 11 de la partie centrale 10 et éventuellement vis-à-vis de bavolets 17 (figure 5).

La fourniture d'un profilé central 13 indépendant des pièces 14, 15 en interface avec les parties structurelles avant 200 et arrière 100 permet de faciliter l'adaptation de la longueur L du profilé central 13 en fonction du véhicule recherché, notamment en fonction de sa longueur finale. Ainsi, le profilé central 13 peut présenter une longueur L ayant une première valeur dimensionnée de sorte que la partie centrale de soubassement 10 présente alors une longueur D lui permettant de recevoir, du côté de l'habitacle, deux places assises décalées entre elles selon la direction latérale Y. La partie centrale de soubassement 10 munie du profilé central 13 ayant la longueur L correspondant à cette première valeur constitue un premier type de partie centrale de soubassement 10.

En combinaison, par adaptation de la longueur L en fonction directement de la longueur D de la partie centrale 10, le profilé central 13 peut présenter une longueur L ayant une deuxième valeur dimensionnée de sorte que la partie centrale de soubassement 10 présente une longueur D lui permettant de recevoir, du côté de l'habitacle, quatre places assises réparties en deux rangs décalés entre eux selon la direction longitudinale X et incluant chacun deux places assises décalées entre elles selon la direction latérale Y. La deuxième valeur est supérieure à la première valeur. La partie centrale de soubassement 10 munie du profilé central 13 ayant la longueur L correspondant à cette deuxième valeur constitue un deuxième type de partie centrale de soubassement différent du premier type de partie centrale de soubassement, notamment au niveau de leurs longueurs D respectives.

Selon un mode de réalisation, ladite au moins une pièce d'extrémité 14, 15 est configurée de sorte à indépendamment pouvoir être utilisée au sein d'une partie centrale de soubassement 10 du premier type et au sein d'une partie centrale de soubassement 10 du deuxième type. Les pièces d'extrémité 14, 15 utilisées dans la partie centrale de soubassement 10 du premier type sont donc identiques aux pièces d'extrémité 14, 15 utilisées dans la partie centrale de soubassement 10 du deuxième type. Cela permet d'abaisser considérablement les coûts de fabrication, de stockage, de conception et d'améliorer la facilité de mise en oeuvre et la flexibilité.

Selon un mode de production particulièrement avantageux de part sa facilité et son prix, le profilé central 13 qui appartient au premier type de partie centrale de soubassement 10 et le profilé central 13 appartenant au deuxième type de partie centrale de soubassement 10 sont adaptés, notamment par découpage, à partir d'un profilé initial (non représenté) identique.

Plus précisément, bien que cela ne soit pas exclusif du champ d'application où il peut être envisagé qu'une seule pièce d'extrémité soit utilisée au sein du tunnel longitudinal de structure 11, ladite au moins une pièce d'extrémité 14, 15 comprend :
- une pièce d'extrémité avant 14 montée à l'extrémité avant du profilé central 13 dans le prolongement du profilé central 13 selon la direction longitudinale X et présentant une interface 141 assurant un raccordement et une fonction de reprise et de transmission d'efforts avec une partie structurelle avant 200 de la caisse structurelle distincte de la partie centrale de soubassement 10 et/ou avec le plancher 12 de la partie centrale de soubassement 10,
- et une pièce d'extrémité arrière 15 montée à l'extrémité arrière du profilé central 13 dans le prolongement du profilé central 13 selon la direction longitudinale X et présentant une interface 151 assurant un raccordement et une fonction de reprise et de transmission d'efforts avec une partie structurelle arrière 100 de la caisse structurelle distincte de la partie centrale de soubassement 10 et/ou avec le plancher 12 de la partie centrale de soubassement 10.

Le profilé central 13, la pièce d'extrémité avant 14 et la pièce d'extrémité arrière 15 sont des pièces indépendantes les une des autres et indépendantes du plancher 12. Toutes ces pièces 13, 14, 15 sont assemblées entre elles et/ou plancher 12 par tout moyen connu et adapté à la fonction du tunnel longitudinal de structure 11.

La longueur L du profilé central 13 correspond sensiblement à la différence entre la longueur D de la partie centrale de soubassement 10 moins la longueur des pièces d'extrémité 14, 15 suivant la direction longitudinale, augmentée des longueurs de recouvrement de chaque pièce d'extrémité 14, 15 par rapport au profilé central 13 dans les zones de chevauchement.

Selon un mode de réalisation facilitant la mise en oeuvre, le plancher 12 est constitué par une pièce monobloc d'un seul tenant sur toute la longueur D de la partie centrale de soubassement 10 suivant la direction longitudinale X et sur toute la largeur d de la partie centrale de soubassement 10 suivant la direction latérale Y. Toutefois, le plancher 12 peut présenter toute autre organisation, par exemple résultant de l'assemblage d'une pluralité de pièces entre elles.

Selon une organisation particulièrement avantageuse en terme de résistance conférée en regard du poids et de l'encombrement du tunnel 11, le plancher 12, ladite au moins une pièce d'extrémité 14, 15 et le profilé central 13 sont conformés et assemblés entre eux de sorte que sur tout ou partie de sa longueur totale suivant la direction longitudinale X, le tunnel longitudinal de structure 11 délimite un corps creux de renfort de forme tubulaire, ayant une section présentant un contour fermé (figure 6). Ainsi, le tunnel 11 en forme de corps creux délimite intérieurement une cavité tubulaire 16 qui s'étend de la partie avant 200 à la partie arrière 100. De préférence et en référence à la figure 6, le profilé central 13 et chaque pièce d'extrémité 14, 15 sont rapportés contre une face supérieure 121 du plancher 12 de sorte que le corps creux de renfort est situé au-dessus du plancher 12 suivant Z, c'est-à-dire du côté de l'habitacle par rapport au plancher 12. Cela favorise à très moindre coût la résistance à la corrosion du tunnel 11.

Par « corps creux », il est entendu de préférence le fait qu'il s'agit d'un corps délimitant une cavité ou un volume, fermé ou partiellement ouvert vers l'extérieur. La délimitation de telles cavités ou de tels volumes participe grandement à la raideur en compression, en flexion, en torsion, en cisaillement, de la partie centrale de soubassement 10 de caisse structurelle, et permet de satisfaire les cahiers des charges fonctionnels subis classiquement par une partie de caisse.

Le corps creux de renfort est configuré (dimensionnement, orientation, forme de la section de coupe, organisation spatiale, etc...) de sorte à encaisser une majorité des efforts (compression, torsion, cisaillement) subis par la partie centrale de soubassement 10 en cas de choc (avant, arrière, latéral, etc...) appliqué à la partie avant 200 et/ou à la partie arrière 100 d'un véhicule équipé de cette partie centrale 10.

Il convient aussi de préciser que le terme « de renfort » signifie de préférence que le corps creux ainsi délimité supporte la plus grande majorité, voire l'intégralité des entrées et des sorties d'efforts mécaniques subis par la partie centrale concernée, éventuellement en coopération avec des bavolets 17 (figure 5) agencés le long de chaque bord longitudinal de la partie centrale 10, éventuellement chacun sous la forme d'un corps creux de renfort de la même manière que pour le tunnel 11.

Selon un mode de réalisation en référence à la figure 6, la section du profilé central 13, dans un plan de coupe perpendiculaire à sa direction d'extrusion W (figure 3), c'est-à-dire selon un plan de coupe (Y, Z) lorsque le profilé central 13 est monté sur le plancher 12, présente un profil à contour ouvert vers le bas, notamment sous la forme d'une base 131 située au-dessus selon Z et à distance du plancher 12 et prolongée à ses extrémités par deux ailes 132 reliant la base 131 et le plancher 12. La section du profilé central 13 peut avantageusement être constante sur toute sa longueur, facilitant sa fabrication, par exemple par une opération d'extrusion. Une telle section du profilé central 13 a la forme d'un U renversé.

Avantageusement, le profilé central 13 est formé dans une matière présentant une limite d'élasticité supérieure à 900 Mpa. Cela permet de conférer une très grande résistance et une très rigidité en dépit d'un poids et d'un encombrement faibles du tunnel 11. L'épaisseur du profilé central 13 est avantageusement comprise entre 0,8 et 1 mm, notamment de l'ordre de 0,9 mm. Un tel matériau peut être par exemple du XE780C ou CP1000.

La caisse structurelle de véhicule automobile comprend une partie centrale de soubassement 10 décrite précédemment, une partie structurelle arrière 100 solidaire du bord arrière de la partie centrale de soubassement 10, une partie structurelle avant 200 solidaire du bord avant de la partie centrale de soubassement 10. Le tunnel longitudinal de structure 11 de la partie centrale de soubassement 10 assure tout ou partie de la transmission des efforts de la partie structurelle avant 200 vers la partie structurelle arrière 100 ou réciproquement assurée par la partie centrale de soubassement 10, notamment en cas de choc extérieur avant appliqué sur la partie structurelle avant 200 et/ou de choc extérieur arrière appliqué sur la partie structurelle arrière 100 du véhicule. La partie restante des efforts peut être transmise via les bavolets 17 notamment.

Au moins par l'intermédiaire de la pièce d'extrémité avant 14 de son tunnel longitudinal de structure 11, la partie centrale de soubassement 10 comprend des éléments de structure avant assurant une reprise d'efforts et ou de transmission d'efforts, notamment en cas de choc avant ou longitudinal appliqué au véhicule sur la partie structurelle avant 200, entre la partie structurelle avant 200 de la caisse et la partie centrale de soubassement 10 de la caisse. Au moins par l'intermédiaire de la pièce d'extrémité arrière 15 de son tunnel longitudinal de structure 11, la partie centrale de soubassement 10 comprend aussi des éléments de structure arrière assurant une reprise d'efforts et ou de transmission d'efforts, notamment en cas de choc arrière ou longitudinal appliqué au véhicule sur la partie structurelle arrière 100, entre la partie structurelle arrière 100 de la caisse et la partie centrale de soubassement 10 de la caisse.

Un procédé avantageux de fabrication d'une telle partie centrale de soubassement 10 peut comprendre une étape d'adaptation de la longueur L du profilé central 13 en fonction de la longueur D de la partie centrale de soubassement 10 suivant la direction longitudinale X du véhicule. L'étape d'adaptation peut notamment comprendre une étape de fourniture du profilé initial évoqué précédemment, puis une étape de découpe de ce profilé initial pour définir la longueur L du profilé central 13, notamment en sélectionnant parmi au moins une longueur L égale à la première valeur correspondant au premier type de partie centrale de soubassement 10 et une longueur L égale à la deuxième valeur correspondant au deuxième type de partie centrale de soubassement 10.

La solution décrite ici favorise un découpage d'un plancher central automobile avec un tunnel 11 en matériau performant profilé couplé à un plancher 12 formant un corps creux de structure adaptable en longueur et garantissant un niveau d'efforts important en structure et en cas de chocs.

L'ensemble après assemblage sur le plancher 12 permet d'assurer une progressivité de l'écrasement de la partie avant de tunnel 11 ainsi que de la partie arrière en préservant le profilé central 13 autant que possible et donc l'habitacle et les occupants.

## Revendications

1. Procédé de fabrication de deux types de parties centrales de soubassement (10) de caisse structurelle de deux types de véhicules automobiles respectifs, destinées à délimiter la partie inférieure de l'habitacle de chaque véhicule, chaque partie centrale de soubassement (10) comprenant un tunnel longitudinal de structure (11), **caractérisé en ce qu'**il comporte l'assemblage entre eux :
- d'un plancher (12) de la partie centrale de soubassement (10),
- d'un profilé central (13) monobloc rapporté sur le plancher (12), orienté suivant une direction longitudinale (X) du véhicule et ayant une longueur (L) dépendant de la longueur (D) de la partie centrale de soubassement (10) suivant la direction longitudinale (X),
le profilé central (13) du véhicule du premier type présentant une longueur (L) ayant une première valeur dimensionnée de sorte que la partie centrale de soubassement (10) présente une longueur (D) lui permettant de recevoir, du côté de l'habitacle, deux places assises décalées entre elles selon une direction latérale (Y) du véhicule, la partie centrale de soubassement (10) munie du profilé central (13) du véhicule premier type ayant la longueur (L) correspondant à ladite première valeur constituant le premier type de partie centrale de soubassement (10), le profilé central (13) du véhicule du deuxième type présentant une longueur (L) ayant une deuxième valeur dimensionnée de sorte que la partie centrale de soubassement (10) présente une longueur (D) lui permettant de recevoir, du côté de l'habitacle, quatre places assises réparties en deux rangs décalés entre eux selon la direction longitudinale (X) et incluant chacun deux places assises décalées entre elles selon la direction latérale (Y), la partie centrale de soubassement (10) munie du profilé central (13) du véhicule du second type ayant la longueur (L) correspondant à ladite deuxième valeur constituant le deuxième type de partie centrale de soubassement (10),
- et d'au moins une pièce d'extrémité (14, 15) agencée dans le prolongement du profilé central (13) et configurée de sorte à présenter une interface (141, 151) assurant un raccordement et une fonction de reprise et de transmission d'efforts avec une partie structurelle (100, 200) de la caisse distincte de la partie centrale de soubassement (10) et/ou avec ledit plancher (12), la pièce d'extrémité (14, 15) utilisées dans la partie centrale de soubassement (10) du premier type étant identique à la pièce d'extrémité (14, 15) utilisées dans la partie centrale de soubassement (10) du deuxième type, le procédé comprenant par l'emploi de la pièce d'extrémité identique une étape d'adaptation de la longueur (L) du profilé central (13) en fonction de la longueur (D) de la partie centrale de soubassement (10) suivant la direction longitudinale (X) du véhicule.

2. Procédé de fabrication selon la revendication 1, **caractérisé en ce que** l'étape d'adaptation comprend une étape de fourniture d'un profilé initial puis une étape de découpe du profilé initial pour définir la longueur (L) du profilé central (13), notamment en sélectionnant parmi au moins une longueur (L) selon la première valeur correspondant au premier type de partie centrale de soubassement (10) et une longueur (L) selon la deuxième valeur correspondant au deuxième type de partie centrale de soubassement (10).

3. Procédé de fabrication selon la revendication 1 ou 2, **caractérisée en ce que** ladite au moins une pièce d'extrémité (14, 15) est configurée de sorte à indépendamment pouvoir être utilisée au sein d'une partie centrale de soubassement (10) du premier type et au sein d'une partie centrale de soubassement (10) du deuxième type.

4. Procédé de fabrication selon la revendication 3, **caractérisée en ce que** le profilé central (13) appartenant au premier type de partie centrale de soubassement (10) et le profilé central (13) appartenant au deuxième type de partie centrale de soubassement (10) sont adaptés, notamment par découpage, à partir d'un profilé initial identique.

5. Procédé de fabrication selon la revendication 4, **caractérisée en ce que** ladite au moins une pièce d'extrémité (14, 15) comprend :
- une pièce d'extrémité avant (14) montée à l'extrémité avant du profilé central (13) dans le prolongement du profilé central (13) selon la direction longitudinale (X) et présentant une interface (141) assurant un raccordement et une fonction de reprise et de transmission d'efforts avec une partie structurelle avant (200) de la caisse distincte de la partie centrale de soubassement (10) et/ou avec le plancher (12),
- et une pièce d'extrémité arrière (15) montée à l'extrémité arrière du profilé central (13) dans le prolongement du profilé central (13) selon la direction longitudinale (X) et présentant une interface (151) assurant un raccordement et une fonction de reprise et de transmission d'efforts avec une partie structurelle arrière (100) de la caisse distincte de la partie centrale de soubassement (10) et/ou avec le plancher (12).

6. Procédé de fabrication selon la revendication 5, **caractérisée en ce que** le plancher (12) est constitué par une pièce monobloc d'un seul tenant sur toute la longueur (D) de la partie centrale de soubassement (10) suivant la direction longitudinale (X) et sur toute la largeur (d) de la partie centrale de soubassement (10) suivant la direction latérale (Y).

7. Procédé de fabrication selon la revendication 6, **caractérisée en ce que** le plancher (12), ladite au moins une pièce d'extrémité (14, 15) et le profilé central (13) sont conformés et assemblés entre eux de sorte que, sur tout ou partie de sa longueur suivant la direction longitudinale, le tunnel longitudinal de structure (11) délimite un corps creux de renfort (16) de forme tubulaire, ayant une section présentant un contour fermé.

8. Procédé de fabrication selon la revendication 7, **caractérisée en ce que** le profilé central (13) et chaque pièce d'extrémité (14, 15) sont rapportés contre une face supérieure (121) du plancher (12) de sorte que le corps creux de renfort (16) est situé au-dessus du plancher (12), du côté de l'habitacle par rapport au plancher (12).

9. Procédé de fabrication selon la revendication 8, **caractérisée en ce que** la section du profilé central (13), dans un plan de coupe perpendiculaire à sa direction d'extrusion (W), présente un profil à contour ouvert, notamment sous la forme d'une base (131) située au-dessus et à distance du plancher (12) et prolongée à ses extrémités par deux ailes (132) reliant la base (131) et le plancher (12).

10. Procédé de fabrication selon la revendication 9, **caractérisée en ce que** le profilé central (13) est formé dans une matière présentant une limite d'élasticité supérieure à 900 Mpa.

## Patentansprüche

1. Verfahren zum Herstellen von zwei Arten von Unterboden-Mittelteilen (10) einer Strukturkarosserie von jeweils zwei Arten von Kraftfahrzeugen, ausgebildet zum Begrenzen des unteren Teils der Fahrgastzelle von jedem Fahrzeug, wobei jedes Unterboden-Mittelteil (10) ein Strukturlängstunnel (11) umfasst, **dadurch gekennzeichnet, dass** es die Verbindung untereinander umfasst:
- eines Bodens (12) des Unterboden-Mittelteils (10),
- eines auf dem Boden (12) angebrachten einteiligen Mittelprofils (13), ausgerichtet in einer Längsrichtung (X) des Fahrzeugs und mit einer Länge (L) abhängig von der Länge (D) des Unterboden-Mittelteils (10) in der Längsrichtung (X),
wobei das Mittelprofil (13) des Fahrzeugs der ersten Art eine Länge (L) mit einem so bemessenen ersten Wert aufweist, dass das Unterboden-Mittelteil (10) eine Länge (D) aufweist, die es ihm ermöglicht, an der Seite der Fahrgastzelle zwei zueinander in seitlicher Richtung (Y) des Fahrzeugs versetzte Sitzplätze aufzunehmen, wobei das mit dem Mittelprofil (13) des Fahrzeugs der ersten Art ausgestattete Unterboden-Mittelteil (10) die Länge (L) entsprechend dem ersten Wert zum Bilden der ersten Art von Unterboden-Mittelteil (10) aufweist, wobei das Mittelprofil (13) des Fahrzeugs der zweiten Art eine Länge (L) mit einem so bemessenen zweiten Wert aufweist, dass das Unterboden-Mittelteil (10) eine Länge (D) aufweist, die es ihm ermöglicht, an der Seite der Fahrgastzelle vier auf zwei zueinander in Längsrichtung (X) versetzte und jeweils zwei zueinander in seitlicher Richtung (Y) versetzte Sitzplätze umfassende Reihen verteilte Sitzplätze aufzunehmen, wobei das mit dem Mittelprofil (13) des Fahrzeugs der zweiten Art ausgestattete Unterboden-Mittelteil (10) die Länge (L) entsprechend dem zweiten Wert zum Bilden der zweiten Art von Unterboden-Mittelteil (10) aufweist,
- und wenigstens eines in der Verlängerung des Mittelprofils (13) angeordnetes Endteils (14, 15), so ausgebildet, dass es eine Schnittstelle (141, 151) aufweist, die eine Verbindung und Funktion zur Aufnahme und Übertragung von Kräften mit einem Strukturteil (100, 200) der Karosserie verschieden vom Unterboden-Mittelteil (10) und/oder mit dem Boden (12) gewährleistet, wobei das im Unterboden-Mittelteil (10) verwendete Endteil (14, 15) der ersten Art identisch mit dem im Unterboden-Mittelteil (10) der zweiten Art verwendete Endteil (14, 15) ist, wobei das Verfahren durch die Verwendung des identischen Endteils einen Schritt zum Anpassen der Länge (L) des Mittelprofils (13) an die Länge (D) des Unterboden-Mittelteils (10) in der Längsrichtung (X) des Fahrzeugs umfasst.

2. Herstellverfahren nach Anspruch 1, **dadurch gekennzeichnet, dass** der Schritt zum Anpassen einen Schritt zum Bereitstellen eines Ausgangsprofils und einen Schritt zum Zuschneiden des Ausgangsprofils zum Definieren der Länge (L) des Mittelprofils (13) umfasst, insbesondere durch Wählen aus wenigstens einer Länge (L) gemäß dem ersten Wert entsprechend der ersten Art von Unterboden-Mittelteil (10) und einer Länge (L) gemäß dem zweiten Wert entsprechend der zweiten Art von Unterboden-Mittelteil (10).

3. Herstellverfahren nach Anspruch 1 oder 2, **dadurch gekennzeichnet, dass** das wenigstens eine Endteil (14, 15) so ausgebildet ist, dass es eigenständig in einem Unterboden-Mittelteil (10) der ersten Art und in einem Unterboden-Mittelteil (10) der zweiten Art verwendet werden kann.

4. Herstellverfahren nach Anspruch 3, **dadurch gekennzeichnet, dass** das zur ersten Art von Unterboden-Mittelteil (10) gehörige Mittelprofil (13) und das zur zweiten Art von Unterboden-Mittelteil (10) gehörige Mittelprofil (13) insbesondere durch Zuschneiden ausgehend von einem identischen Ausgangsprofil angepasst werden.

5. Herstellverfahren nach Anspruch 4, **dadurch gekennzeichnet, dass** das wenigstens eine Endteil (14, 15) umfasst:
- ein am vorderen Ende des Mittelprofils (13) in Verlängerung des Mittelprofils (13) in der Längsrichtung (X) montiertes vorderes Endteil (14), das eine Schnittstelle (141) aufweist, die eine Verbindung und Funktion zur Aufnahme und Übertragung von Kräften mit einem vorderen Strukturteil (200) der Karosserie verschieden vom Unterboden-Mittelteil (10) und/oder mit dem Boden (12) gewährleistet,
- und ein am hinteren Ende des Mittelprofils (13) in Verlängerung des Mittelprofils (13) in der Längsrichtung (X) montiertes hinteres Endteil (15), das eine Schnittstelle (151) aufweist, die eine Verbindung und Funktion zur Aufnahme und Übertragung von Kräften mit einem hinteren Strukturteil (100) der Karosserie verschieden vom Unterboden-Mittelteil (10) und/oder mit dem Boden (12) gewährleistet.

6. Herstellverfahren nach Anspruch 5, **dadurch gekennzeichnet, dass** der Boden (12) aus einem einteiligen auf der gesamten Länge (D) des Unterboden-Mittelteils (10) in der Längsrichtung (X) und auf der gesamten Breite (d) des Unterboden-Mittelteils (10) in der seitlichen Richtung (Y) integrierten Teil besteht.

7. Herstellverfahren nach Anspruch 6, **dadurch gekennzeichnet, dass** der Boden (12), das wenigstens eine Endteil (14, 15) und das Mittelprofil (13) untereinander so angepasst und verbunden sind, dass auf der gesamten Länge in Längsrichtung oder einem Teil hiervon der Strukturlängstunnel (11) einen Verstärkungshohlkörper (16) in Rohrform mit einem Querschnitt, der einen geschlossenen Umriss aufweist, begrenzt.

8. Herstellverfahren nach Anspruch 7, **dadurch gekennzeichnet, dass** das Mittelprofil (13) und jedes Endteil (14, 15) gegen eine Oberseite (121) des Bodens (12) so angebracht sind, dass der Verstärkungshohlkörper (16) oberhalb des Bodens (12) auf der Fahrgastzellenseite in Bezug zum Boden (12) angeordnet ist.

9. Herstellverfahren nach Anspruch 8, **dadurch gekennzeichnet, dass** der Querschnitt des Mittelprofils (13) auf einer Schnittebene senkrecht zur Extrusionsrichtung (W) ein offenes Umrissprofil aufweist, insbesondere in der Form einer oberhalb und in Abstand zum Boden (12) angeordneten und bis zu ihren Enden durch zwei die Basis (131) und den Boden (12) verbindenden Flügeln (132) verlängerten Basis (131).

10. Herstellverfahren nach Anspruch 9, **dadurch gekennzeichnet, dass** das Mittelprofil (13) aus einem Material mit einer Elastizitätsgrenze größer als 900 Mpa ausgebildet ist.

## Claims

1. Method for manufacturing two types of central structural-body understructure parts (10) of two respective types of motor vehicle, said central parts being intended to delimit the lower part of the passenger compartment of each vehicle, each central understructure part (10) comprising a longitudinal structure tunnel (11), **characterized in that** it comprises the mutual assembly:
- of a floor (12) of the central understructure part (10),
- of a one-piece central profiled section (13) which is attached to the floor (12), is oriented in a longitudinal direction (X) of the vehicle and has a length (L) dependent on the length (D) of the central understructure part (10) in the longitudinal direction (X),
the central profiled section (13) of the vehicle of the first type having a length (L) that has a first value such that the central understructure part (10) has a length (D) that allows it to receive, on the passenger-compartment side, two seating positions that are offset from one another in a lateral direction (Y) of the vehicle, the central understructure part (10) provided with the central profiled section (13) of the vehicle of the first type that has the length (L) corresponding to said first value constituting the first type of central understructure part (10), the central profiled section (13) of the vehicle of the second type having a length (L) that has a second value such that the central understructure part (10) has a length (D) that allows it to receive, on the passenger-compartment side, four seating positions that are distributed in two rows that are offset from one another in the longitudinal direction (X) and each include two seating positions that are offset from one another in the lateral direction (Y), the central understructure part (10) provided with the central profiled section (13) of the vehicle of the second type that has the length (L) corresponding to said second value constituting the second type of central understructure part (10),
- and at least one end part (14, 15) that is arranged in line with the central profiled section (13) and is configured so as to have an interface (141, 151) for connecting to and providing a function of reacting and transmitting loads with a structural part (100, 200) of the body that is separate from the central understructure part (10) and/or to/with said floor (12), the end part (14, 15) used in the central understructure part (10) of the first type being identical to the end part (14, 15) used in the central understructure part (10) of the second type, the method comprising, through the use of the identical end part, a step of adapting the length (L) of the central profiled section (13) depending on the length (D) of the central understructure part (10) in the longitudinal direction (X) of the vehicle.

2. Manufacturing method according to Claim 1, **characterized in that** the adaptation step comprises a step of supplying an initial profiled section and then a step of cutting the initial profiled section so as to define the length (L) of the central profiled section (13), notably by selecting from at least one length (L) of the first value corresponding to the first type of central understructure part (10) and a length (L) of the second value corresponding to the second type of central understructure part (10).

3. Manufacturing method according to Claim 1 or 2, **characterized in that** said at least one end part (14, 15) is configured so as to be able to be used independently within a central understructure part (10) of the first type or within a central understructure part (10) of the second type.

4. Manufacturing method according to Claim 3, **characterized in that** the central profiled section (13) belonging to the first type of central understructure part (10) and the central profiled section (13) belonging to the second type of central understructure part (10) are adapted, notably by cutting, from an identical initial profiled section.

5. Manufacturing method according to Claim 4, **characterized in that** said at least one end part (14, 15) comprises:
- a front end part (14) that is mounted at the front end of the central profiled section (13) in line with the central profiled section (13) in the longitudinal direction (X) and has an interface (141) for connecting to and providing a function of reacting and transmitting loads with a front structural part (200) of the body that is separate from the central understructure part (10) and/or to/with the floor (12),
- and a rear end part (15) that is mounted at the rear end of the central profiled section (13) in line with the central profiled section (13) in the longitudinal direction (X) and has an interface (151) for connecting to and providing a function of reacting and transmitting loads with a rear structural part (100) of the body that is separate from the central understructure part (10) and/or to/with the floor (12).

6. Manufacturing method according to Claim 5, **characterized in that** the floor (12) is made up of a one-piece part that is integral along the entire length (D) of the central understructure part (10) in the longitudinal direction (X) and across the entire width (d) of the central understructure part (10) in the lateral direction (Y).

7. Manufacturing method according to Claim 6, **characterized in that** the floor (12), said at least one end part (14, 15) and the central profiled section (13) are shaped and assembled together such that, along all or part of its length in the longitudinal direction, the longitudinal structure tunnel (11) delimits a hollow reinforcing body (16) of tubular shape, having a cross section with a closed contour.

8. Manufacturing method according to Claim 7, **characterized in that** the central profiled section (13) and each end part (14, 15) are attached to an upper face (121) of the floor (12) such that the hollow reinforcing body (16) is situated above the floor (12), on the passenger-compartment side with respect to the floor (12) .

9. Manufacturing method according to Claim 8, **characterized in that** the cross section of the central profiled section (13), in a section plane perpendicular to its extrusion direction (W), has a profile with an open contour, notably in the form of a base (131) that is situated above and at a distance from the floor (12) and is extended at its ends by two side plates (132) that connect the base (131) and the floor (12).

10. Manufacturing method according to Claim 9, **characterized in that** the central profiled section (13) is formed from a material having an elastic limit greater than 900 MPa.
